# EUROPÄISCHE PATENTSCHRIFT

(11) **EP 0 677 678 B1**
(45) Veröffentlichungstag und Bekanntmachung des Hinweises auf die Patenterteilung: **22.07.1998**
(21) Anmeldenummer: 95105157.2
(22) Anmeldetag: 06.04.1995
(51) Int. Cl.: F16D 65/14, F16D 65/60

(54) **Trommelbremse für Fahrzeugachsen**
Drum brake for vehicle axles
Frein à tambour pour axes de véhicules

(30) Priorität: 14.04.1994 DE 4412802
(43) Veröffentlichungstag der Anmeldung: 18.10.1995
(73) Patentinhaber: BPW Bergische Achsen Kommanditgesellschaft, 51674 Wiehl (DE)
(72) Erfinder: Klaas, Thomas, D-51580 Reichshof (DE); Flick, Joachim, Dipl.-Ing., D-51674 Wiehl (DE)
(74) Vertreter: Stenger, Watzke & Ring Patentanwälte

(56) Entgegenhaltungen:
- EP-A- 0 158 034
- DE-A- 1 425 397
- DE-U- 9 306 332

## Beschreibung

Die Erfindung betrifft eine Trommelbremse für Fahrzeugachsen mit einer von einem Bremszylinder betätigbaren Bremsnockenwelle, die sowohl im Bereich ihres den Bremsnocken tragenden Endes mittels eines an einem Bremsträger ausgebildeten Lagers als auch im Bereich ihres einen Gestängesteller tragenden anderen Endes über ein Stützlager am Achskörper verdrehbar gelagert ist, wobei der Gestängesteller mit einem auf der Bremsnockenwelle unverdrehbar angeordneten Schneckenrad zur Nachstellung des Bremsbelagverschleißes und mit einem Lagerring für einen unverdrehbar am Achskörper gehaltenen Hebel versehen ist. Eine derartige Trommelbremse ist z.B. aus der DE-U-93 06 332 bekannt.

Bei der voranstehend beschriebenen bekannten Konstruktion wird die Bremsnockenwelle an ihrem den Gestängesteller tragenden Ende über ein Stützlager abgestützt, das aus einer die Mantelfläche der Bremsnockenwelle mittels einer zylindrischen Lagerbohrung aufnehmenden Lagerkugel und diese Lagerkugel aufnehmenden Lagerschalen besteht, die ihrerseits an einer am Achskörper angeschweißten Tragplatte durch Schrauben befestigt sind. Die Tragplatte dient gleichzeitig zur Aufnahme eines sogenannten Festpunkthalters, der mit dem im Gehäuse des Gestängestellers angeordneten Lagerring über einen Hebel verbunden ist, so daß das Getriebe des automatischen Gestängestellers einen Festpunkt erhält. Ein solcher Festpunkt ist für die automatische Nachstellung der Bremsnockenwelle entsprechend dem Bremsbelagverschleiß erforderlich, weil der auf der Bremsnockenwelle angeordnete Gestängesteller zugleich als Betätigungshebel für den Bremszylinder dient.

Der Erfindung liegt die **Aufgab** e zugrunde, bei einer für Fahrzeugachsen bestimmten Trommelbremse der eingangs beschriebenen Art die Anzahl der verwendeten Bauteile zu reduzieren und die Montage zu vereinfachen.

Die **Lösung** dieser Aufgabenstellung durch die Erfindung ist dadurch gekennzeichnet, daß das Stützlager durch die sich an einer zylindrischen Bohrung des Gestängestellergehäuses abstützende Mantelfläche des mittels eines achsparallel verlaufenden Profils auf der Bremsnockenwelle befestigten Schneckenrades und durch die Mantelfläche des im Gestängestellergehäuse gelagerten Lagerringes gebildet ist, der mit einem seinerseits an einer am Achskörper angeordneten Tragplatte befestigten Lagerhebel verbunden ist.

Durch die erfindungsgemäße Weiterbildung entfällt das bisher erforderliche zusätzliche Stützlager aus Lagerkugel, Lagerschalen und Abdichtung. Statt dessen wird die Bremsnockenwelle an dem den Gestängesteller tragenden Ende über diesen Gestängesteller am Achskörper abgestützt, wozu es lediglich erforderlich ist, den Gestängesteller mit entsprechenden Lagerflächen zu versehen, welche die Aufgabe des bisherigen separaten Stützlagers übernehmen können. Insgesamt ergibt sich somit durch den erfindungsgemäßen Vorschlag eine Reduzierung der notwendigen Bauteile und eine Vereinfachung bei der Montage, da sämtliche Teile des bisher erforderlichen zusätzlichen Stützlagers entfallen.

Gemäß einem weiteren Merkmal der Erfindung kann der zur mittelbaren Lagerung der Bremsnockenwelle herangezogene Lagerhebel des Gestängestellers zugleich als Festpunkthalter für das Getriebe des Gestängestellers ausgebildet werden. Hierdurch entfällt zusätzlich zum separaten Stützlager der bisher erforderliche Festpunkthalter und dessen Verbindung mit dem aus dem Gehäuse des Gestängestellers herausgeführten Festpunkthebel.

Bei einer bevorzugten Ausführungsform der Erfindung ist der im Gestängestellergehäuse gelagerte Lagerring über rechtwinklig zu seiner Mantelfläche hervorstehende, aus einer Seitenabdeckung des Gestängestellergehäuses herausragende Vorsprünge mit dem mit entsprechenden Aussparungen versehenen Lagerhebel verbunden. Hierdurch ergibt sich eine besonders einfache und sichere Verbindung zwischen Lagerring und Lagerhebel.

Um eine weitere Vereinfachung der erfindungsgemäßen Konstruktion zu erzielen, wird schließlich vorgeschlagen, die Mantelflächen des Schneckenrades und des Lagerringes in derselben, durchgehenden Bohrung des Gestängestellergehäuses zu lagern.

Auf der Zeichnung ist ein Ausführungsbeispiel der Erfindung dargestellt, und zwar zeigen:
- Fig. 1: eine teilweise geschnittene Ansicht einer an einem Achskörper gelagerten Bremsnockenwelle,
- Fig. 2: einen Querschnitt gemäß der Schnittlinie II - II in Fig. 1,
- Fig. 3: einen weiteren Schnitt gemäß der Schnittlinie III - III in Fig. 2,
- Fig. 4: eine vergrößerte und teilweise geschnittene Ansicht des den Gestängesteller tragenden Endes der Bremsnockenwelle,
- Fig. 5: eine Schnittdarstellung der Verbindung zwischen Lagerring und Lagerhebel, bevor diese miteinander verbunden werden,
- Fig. 6: eine Stirnansicht des Lagerringes und
- Fig. 7: eine Seitenansicht des Lagerhebels.

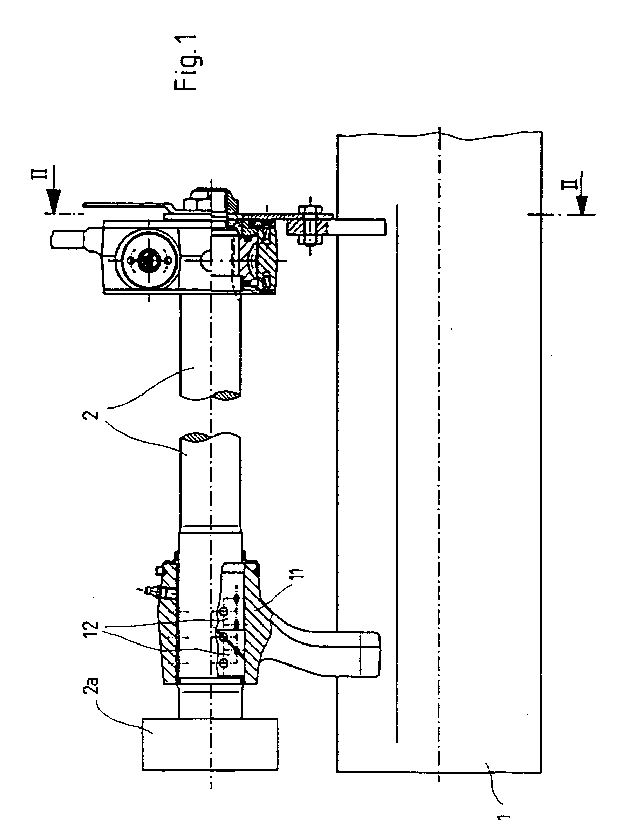

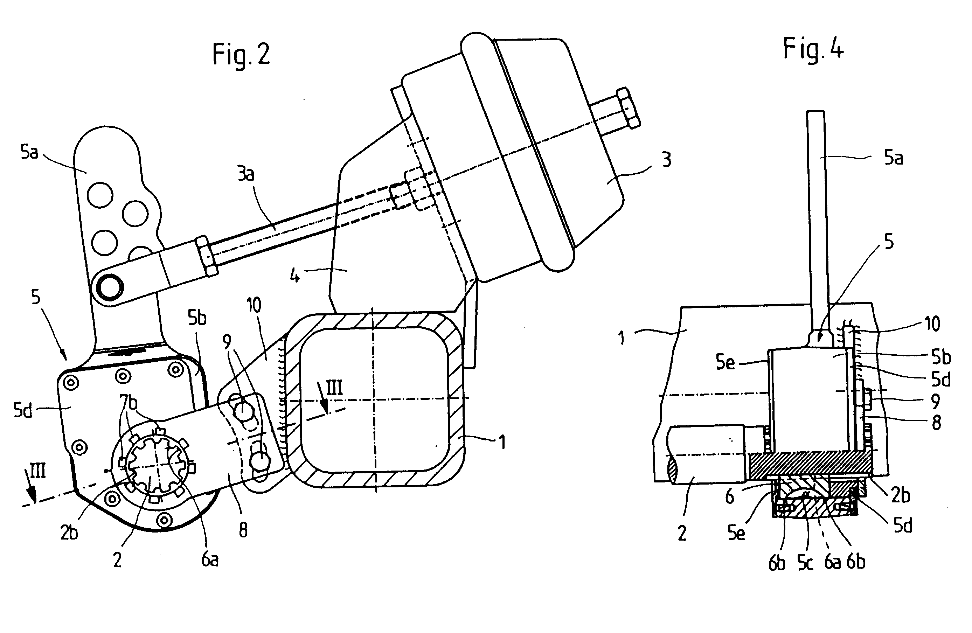

In Fig. 1 ist ein Ende eines Achskörpers 1 dargestellt, der gemäß Fig. 2 beim Ausführungsbeispiel durch ein im Querschnitt etwa quadratisches Rohr gebildet wird. An diesem Achskörper 1 ist eine Bremsnockenwelle 2 verdrehbar gelagert, deren Bremsnocken 2a zur Betätigung der Bremsbacken einer auf der Zeichnung nicht dargestellten Trommelbremse dient. Die jeweils einen Bremsvorgang hervorrufende Verdrehung der Bremsnockenwelle 2 erfolgt durch einen Bremszylinder 3, der mittels einer Tragkonsole 4 ebenfalls am Achskörper 1 angeordnet ist und dessen Kolbenstange 3a mit dem Hebelarm 5a eines automatischen Gestängestellers 5 verbunden ist. Dieser Gestängesteller 5 umfaßt ein Getriebe, mit dessen Hilfe die Ausgangsstellung der Bremsnockenwelle 2 entsprechend dem Bremsbelagverschleiß selbsttätig nachgestellt wird.

Dieses in einem einstückig mit dem Hebelarm 5a ausgeführten Gehäuse 5b des Gestängestellers 5 angeordnete Getriebe umfaßt ein Schneckenrad 6, das mittels eines achsparallel verlaufenden Profils, beispielsweise Keilwellenprofils 6a oder eines Zahnwellenprofils auf ein entsprechendes Profil 2b der Bremsnockenwelle 2 unverdrehbar und spielfrei aufgesteckt ist. Der Querschnitt der beiden beim Ausführungsbeispiel als Keilwellenprofile 2b und 6a ausgebildeten Profile ist in Fig. 2 zu erkennen.

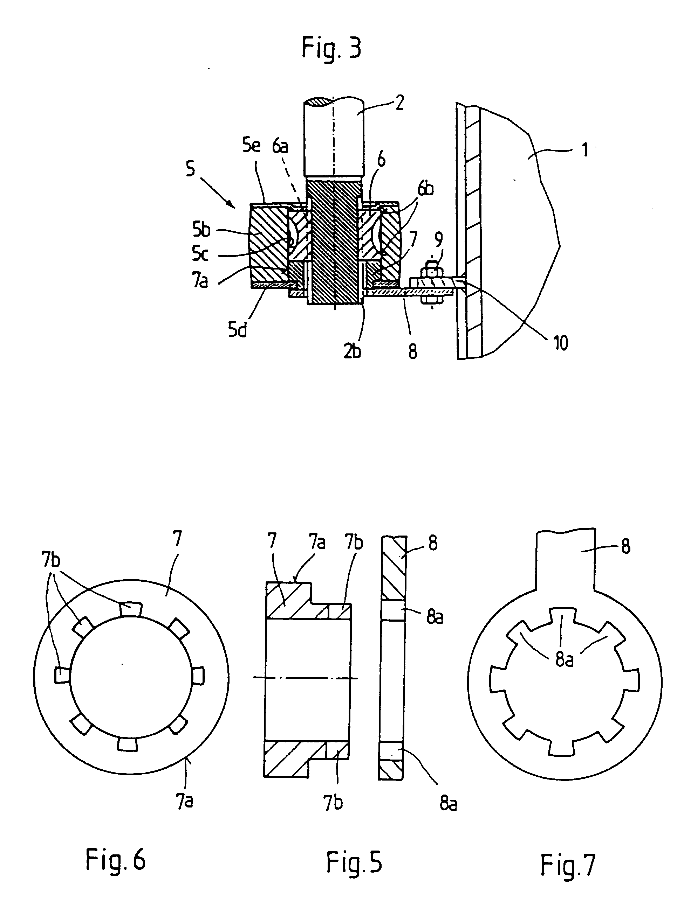

Wie aus den Fig. 3 und 4 hervorgeht, ist das Schneckenrad 6 beidseitig mit einer ringförmigen Mantelfläche 6b ausgebildet, die sich als Lagerfläche in einer zylindrischen Bohrung 5c des Gehäuses 5b abstützt. Diese zylindrische Bohrung 5c dient gleichzeitig im benachbarten Bereich als Lagerfläche für die zylindrische Mantelfläche 7a eines Lagerringes 7, der mit einem Lagerhebel 8 fest verbunden ist. Ein Ausführungsbeispiel dieser festen Verbindung zwischen Lagerring 7 und Lagerhebel 8 ist in den Fig. 5 bis 7 dargestellt.

Wie diese Darstellungen zeigen, ist der Lagerring 7 über rechtwinklig zu seiner Mantelfläche 7a hervorstehende Vorsprünge 7b mit dem Lagerhebel 8 verbunden, der zu diesem Zweck mit den Vorsprüngen 7b entsprechenden Aussparungen 8a versehen ist. Die Fig. 3 und 4 zeigen, daß über diese Vorsprünge 7b und Aussparungen 8a eine feste Verbindung zwischen dem Lagerring 7 und Lagerhebel 8 erfolgt, wenn der Lagerring 7 in die zylindrische Bohrung 5c des Gehäuses 5b eingesetzt und das Gehäuse 5b stirnseitig durch eine Abdeckung 5d verschlossen worden ist.

Gemäß den Fig. 2 bis 4 wird der Lagerhebel 8 mittels Schrauben 9 an einer Tragplatte 10 befestigt, die ihrerseits mit dem Achskörper 1 verschweißt ist. Eine der Abdeckung 5d entsprechende Abdeckung 5e schließt auch die gegenüberliegende Seite des Gehäuses 5b des Gestängestellers 5 ab.

Durch die Befestigung des Lagerhebels 8 mittels der Schrauben 9 an der Tragplatte 10 und die feste Verbindung zwischen Lagerhebel 8 und Lagerring 7 erfolgt eine verschwenkbare Lagerung des Gestängestellers 5 über die als Lagerflächen dienende Mantelfläche 7a des Lagerringes 7 und die zylindrische Bohrung 5a des Gehäuses 5b. Da die zylindrische Bohrung 5c im Gehäuse 5b des Gestängestellers 5 zugleich als Lagerfläche für die ringförmigen Mantelflächen 6b des über die Keilwellenprofile 2b und 6a auf der Bremsnockenwelle 2 angeordneten Schneckenrades 6 dient, ergibt sich mittelbar eine Lagerung des den Gestängesteller 5 tragenden Endes der Bremsnockenwelle 2 am Achskörper 1. Ein separates Stützlager kann auf diese Weise entfallen.

Da der Lagerring 7 über seine feste Verbindung mit dem Lagerhebel 8 unverdrehbar über die Tragplatte 10 am Achskörper 1 abgestützt ist, kann er zugleich zur Bildung des Festpunktes des im Gestängesteller 5 angeordneten Getriebes herangezogen werden. Auf diese Weise entfallen die bisher erforderlichen Festpunkthalter und Festpunkthebel.

Die voranstehend beschriebene Konstruktion reduziert somit die Anzahl der zur Lagerung der Bremsnockenwelle 2 und zur Schaffung eines Fixpunktes für das Getriebe des Gestängestellers 5 erforderlichen Bauteile. Außerdem wird die Montage der Trommelbremse vereinfacht. Das zur Lagerung der Bremsnockenwelle 2 im Bereich ihres den Bremsnocken 2a tragenden Endes verwendete Lager ist in Fig. 1 zu erkennen. Es besteht aus einem am Achskörper 1 befestigten Lagerarm 11, in dessen Bohrung Lagerschalen 12 eingesetzt sind, welche mit der zylindrischen Mantelfläche der Bremsnockenwelle 2 zusammenwirken.

### Bezugszeichenliste:

- 1: Achskörper
- 2: Bremsnockenwelle
- 2a: Bremsnocken
- 2b: Keilwellenprofil
- 3: Bremszylinder
- 3a: Kolbenstange
- 4: Tragkonsole
- 5: Gestängesteller
- 5a: Hebelarm
- 5b: Gehäuse
- 5c: Bohrung
- 5d: Abdeckung
- 5e: Abdeckung
- 6: Schneckenrad
- 6a: Keilwellenprofil
- 6b: Mantelfläche
- 7: Lagerring
- 7a: Mantelfläche
- 7b: Vorsprung
- 8: Lagerhebel
- 8a: Aussparung
- 9: Schraube
- 10: Tragplatte
- 11: Lagerarm
- 12: Lagerschale

## Patentansprüche

1. Trommelbremse für Fahrzeugachsen mit einer von einem Bremszylinder betätigbaren Bremsnockenwelle (2), die sowohl im Bereich ihres den Bremsnocken (2a) tragenden Endes mittels eines Lagers als auch im Bereich ihres einen Gestängesteller (5) tragenden anderen Endes über ein Stützlager am Achskörper (1) verdrehbar gelagert ist, wobei der Gestängesteller (5) mit einem auf der Bremsnockenwelle (2) unverdrehbar angeordneten Schneckenrad (6) zur Nachstellung des Bremsbelagverschleißes und mit einem Lagerring (7) für einen unverdrehbar am Achskörper (1) gehaltenen Hebel (8) versehen ist,
**dadurch gekennzeichnet,**
daß das Stützlager durch die sich an einer zylindrischen Bohrung (5c) des Gestängestellergehäuses (5b) abstützende Mantelfläche (6b) des mittels eines achsparallel verlaufenden Profils (2b,6a) auf der Bremsnockenwelle (2) befestigten Schneckenrades (6) und durch die Mantelfläche (7a) des im Gestängestellergehäuse (5b) gelagerten Lagerringes (7) gebildet ist, der mit einem seinerseits an einer am Achskörper (1) angeordneten Tragplatte (10) befestigten Lagerhebel (8) verbunden ist.

2. Trommelbremse nach Anspruch 1, dadurch gekennzeichnet, daß der Lagerhebel (8) zugleich als Festpunkthalter für das Getriebe des Gestängestellers (5) ausgebildet ist.

3. Trommelbremse nach Anspruch 1 oder 2, dadurch gekennzeichnet, daß der im Gestängestellergehäuse (5b) gelagerte Lagerring (7) über rechtwinklig zu seiner Mantelfläche (7a) hervorstehende, aus einer Abdeckung (5d) des Gestängestellergehäuses (5b) herausragende Vorsprünge (7b) mit dem mit entsprechenden Aussparungen (8a) versehenen Lagerhebel (8) verbunden ist.

4. Trommelbremse nach Anspruch 2 oder 3, dadurch gekennzeichnet, daß die Mantelflächen (6b,7a) des Schneckenrades (6) und des Lagerringes (7) in derselben, durchgehenden Bohrung (5c) des Gestängestellergehäuses (5b) gelagert sind.

## Claims

1. Drum brake for vehicle axles, having a brake camshaft (2) which can be operated by a brake cylinder and is mounted rotatably on the axle body (1) in the region of its end which bears the brake cam (2a), by means of a bearing, and also in the region of its other end which bears a slack adjuster (5), via a supporting bearing, the slack adjuster (5) being provided with a worm wheel (6), which is arranged non-rotatably on the brake camshaft (2), for adjusting the brake-linking wear, and with a bearing ring (7) for a lever (8) held non-rotatably on the axle body (1), characterized in that the supporting bearing is formed by the circumferential surface (6b), which is supported on a cylindrical bore (5c) in the slack-adjuster housing (5b), of the worm wheel (6), which is secured on the brake camshaft (2) by means of a profile (2b, 6a) running parallel to the axis, and is formed by the circumferential surface (7a) of the bearing ring (7) which is mounted in the slack-adjuster housing (5b) and is connected to a bearing lever (8) which is in turn secured on a supporting plate (10) arranged on the axle body (1).

2. Drum brake according to Claim 1, characterized in that the bearing lever (8) is designed at the same time as a fixed-point mount for the gear mechanism of the slack adjuster (5).

3. Drum brake according to Claim 1 or 2, characterized in that the bearing ring (7), which is mounted in the slack-adjuster housing (5b), is connected via projections (7b), which protrude at right angles with respect to its circumferential surface (7a) and project out of a cover (5d) in the slack-adjuster housing (5b), to the bearing lever (8) which is provided with appropriate cutouts (8a).

4. Drum brake according to Claim 2 or 3, characterized in that the circumferential surfaces (6b, 7a) of the worm wheel (6) and of the bearing ring (7) are mounted in the same, continuous bore (5c) in the slack-adjuster housing (5b).

## Revendications

1. Frein à tambour pour essieux de véhicules, comportant un arbre à came de frein (2) propre à être actionné à partir d'un cylindre de frein et qui est monté, de manière à pouvoir tourner, aussi bien dans la zone de son extrémité portant la came de frein (2a), au moyen d'un palier, que dans la zone de son autre extrémité portant le régleur automatique de timonerie (5), par l'intermédiaire d'un palier d'appui au niveau du corps d'essieu (1), dans lequel le régleur de timonerie (5) est pourvu d'une roue à denture hélicoïdale (6), située de manière à ne pas pouvoir tourner, sur l'arbre à came de frein (2) et servant à compenser l'usure de la garniture de frein, ainsi que d'un anneau de support (7) pour un levier (8) maintenu, de manière à ne pas tourner, au niveau du corps d'essieu (1),
caractérisé en ce que le palier d'appui est constitué par la surface d'enveloppe (6b) de la roue à denture hélicoïdale (6), fixée sur l'arbre à came de frein (2), par l'intermédiaire d'un profilé (2b, 6a) s'étendant parallèlement à l'axe, laquelle surface s'appuyant contre un alésage cylindrique (5c) du carter de régleur de timonerie (5b), ainsi que par la surface d'enveloppe (7a) de l'anneau de support (7), monté dans le carter de régleur de timonerie (5b) et qui est relié, à un levier de support (8) fixé, quant à lui, sur une plaque d'appui (10) disposée au niveau du corps d'essieu (1).

2. Frein à tambour selon la revendication 1, caractérisé en ce que le levier de support (8) est réalisé en même temps en tant qu'élément de maintien de point fixe pour l'engrenage du régleur de timonerie (5).

3. Frein à tambour selon la revendication 1 ou 2, caractérisé en ce que l'anneau de support (7), monté dans le carter de régleur de timonerie (5b), est relié, par l'intermédiaire de protubérances (7b) faisant saillie à angle droit par rapport à sa surface d'enveloppe (7a) et dépassant d'un couvercle (5d) du carter de régleur de timonerie (5b), au levier de support (8) pourvu d'évidements correspondants (8a).

4. Frein à tambour selon la revendication 2 ou 3, caractérisé en ce que les surfaces d'enveloppe (6b, 7a) de la roue à denture hélicoïdale (6) et de l'anneau de support (7) sont montées dans le même alésage traversant (5c) du carter de régleur de timonerie (5b).
